# EUROPÄISCHE PATENTSCHRIFT

(11) **EP 0 961 791 B1**
(45) Veröffentlichungstag und Bekanntmachung des Hinweises auf die Patenterteilung: **08.05.2002**
(21) Anmeldenummer: 98912217.1
(22) Anmeldetag: 13.02.1998
(51) Int. Cl.: C08F 10/00, C08F 4/642

(54) **VERFAHREN UND KATALYSATOR ZUR HERSTELLUNG VON MITTEL- BIS ULTRA HOCHMOLEKULAREN POLYOLEFINEN**
METHOD AND CATALYST FOR PRODUCING POLYOLEFINS OF MEDIUM TO ULTRA-HIGH MOLECULAR WEIGHT
PROCEDE ET CATALYSEUR POUR PREPARER DES POLYOLEFINES DE POIDS MOLECULAIRE MOYEN A ULTRA ELEVE

(30) Priorität: 19.02.1997 DE 19706409
(43) Veröffentlichungstag der Anmeldung: 08.12.1999
(73) Patentinhaber: Buna Sow Leuna Olefinverbund GmbH, 06258 Schkopau (DE)
(72) Erfinder: SCHELLENBERG, Jürgen, D-06132 Halle (DE); KERRINNES, Heinz-Jürgen, D-06128 Halle (DE); FRITZSCHE, Gerd, D-06268 Querfurt (DE); LOHSE, Gerd, D-06258 Schkopau (DE)
(86) Internationale Anmeldenummer: DE9800420
(87) Internationale Veröffentlichungsnummer: WO9837108

(56) Entgegenhaltungen:
- EP-A- 0 289 029
- EP-A- 0 514 594
- DD-A- 282 013
- US-A- 5 492 978

## Beschreibung

Die Erfindung betrifft ein Verfahren zur Herstellung von mittel- bis ultrahochmolekularen Polyolefinen durch Homo- oder Copolymerisation von Olefinen, speziell Ethylen, mit anderen α-Olefinen in Gegenwart eines auf ein organisches Polymermaterial geträgerten metallocenartigen Ziegler-Natta-Mischkatalysators für die Fertigung von Formkörpern beispielsweise durch Extrusion, Spritzgießen, Folienblasen, Sinterpressen oder Ramextrusion.

Weiterhin betrifft die Erfindung ein auf einem organischen Polymermaterial geträgerten metallocenartigen Ziegler-Natta-Mischkatalysator sowie ein Verfahren zur Herstellung eines auf einem organischen Polymermaterial geträgerten metallocenartigen Ziegler-Natta-Mischkatalysators.

Die Homo- und Copolymerisation von Olefinen in Gegenwart von löslichen homogenen Katalysatorsystemen auf der Grundlage von Übergangsmetallkomplexen beispielsweise des Titans oder Zirkoniums mit substituierten und nicht substituierten Cyclopentadienyl-Liganden sowie aluminiumorganischen Verbindungen als Cokatalysatoren ist bekannt (z.B. US 4404344). Trotz vieler Vorzüge dieser Katalysatoren können solche Systeme in nicht in Lösung ausgeführten Polymerisationsprozessen wie Suspensions- oder Gasphasenverfahren nur sehr schwer gehandhabt werden und führen dann nur zu ungenügenden morphologischen Eigenschaften der hergestellten Polymerisate.

Zur Vermeidung dieser Nachteile sind Katalysatorsysteme vorgeschlagen worden, die zur Heterogenisierung dieser Katalysatoren mindestens eine Komponente auf einem unlöslichen festen Trägermaterial fixieren. Als solche Trägermaterialien dienen in den meisten Anwendungen anorganische oxidische Verbindungen insbesondere des Siliziums und Aluminiums oft in Kombination mit anorganischen Chloriden.

Katalysatorsystemen auf der Grundlage solcher Trägermaterialien haftet jedoch der Nachteil an, daß sie bei ihrer Präparation zur Entfernung überschüssiger Feuchtigkeit und noch vorhandener Katalysatorgifte in den Trägermaterialien sowie zur Konditionierung des Katalysators einer Hochtemperaturbehandlung unterworfen werden müssen. Weitere Nachteile sind das Auftreten von Korrosionserscheinungen an den Polymerverarbeitungsmaschinen beispielsweise infolge noch verbleibender Restgehalte an Chlor in den hergestellten Polymerisaten sowie durch den Verbleib der anorganischen Trägermaterialien im Polymerisat hervorgerufene unerwünschte Verarbeitungserscheinungen wie Stippen.

In weit geringerem Umfang sind Katalysatorsysteme auf der Basis von organischen polymeren Trägermaterialien vorgeschlagen worden.

Diese Trägermaterialien können als poröse Polymerisate wie beispielsweise Polyethylen, Polypropylen, Polystyrol oder als Copolymerisate wie diejenigen aus Styrol und Divinylbenzol sowohl in unvernetzter als auch in vernetzter Form als nicht funktionalisierte Substrate eingesetzt werden. Möglichkeiten zur Aufbringung der Katalysatorkomponenten auf die nicht funktionalisierten Polymermaterialien bestehen dann in einer Vereinigung der Katalysatorkomponenten mit dem Trägermaterial in Lösung und einer anschließenden Entfernung des Lösungsmittels (z.B. US 5498582, US 5139985, US 5118648, EP 131832) bzw. im Einbetten des Katalysators im Polymer durch Erweichen und Rühren des polymeren Trägers (EP 131832).

Solche Vorgehensweisen erweisen sich jedoch als nachteilig dahingehend, daß die nicht fest auf dem Polymerträger fixierten Katalysatorsysteme insbesondere während der Polymerisationsphase einem ständigen Abtragungsprozeß von der Polymeroberfläche beispielsweise durch das Suspendiermittel, die Monomeren oder den Verwirbelungsprozeß im Gasphasenverfahren unterworfen bzw. durch das Einbetten des Katalysators im polymeren Träger für Polymerisationsreaktionen teilweise unzugänglich sind. Folgen davon sind unter anderem eine geringere Aktivität des Katalysatorsystems sowie ein hoher Anteil an unerwünschten sehr feinen Polymerpartikeln.

Andererseits sind Vorgehensweisen bekannt, die solche Nachteile durch eine feste Fixierung der Katalysatorkomponenten auf der Polymeroberfläche durch die Bildung chemischer Bindungen über funktionelle Gruppen des Trägermaterials überwinden.

Bekannte Lösungen hierfür sind beispielsweise Katalysatorzusammensetzungen aus Biscyclopentadienylzirkonium-Verbindungen und Methylalumoxanen auf
p-Acetoxystyrol enthaltenden Styrol-Divenylbenzol-Polymerisaten (US 5461017). Nachteilig erweist sich bei einem technischen Einsatz dieser Katalysatoren jedoch die Notwendigkeit der Verwendung von nur in aufwendiger Verfahrensweise zugänglichen und unzureichend verfügbaren Cokatalysatoren.

Weiterhin sind geträgerte Katalysatoren bekannt, die eine feste Fixierung der Katalysatorkomponenten auf den organischen Polymermaterialien durch chemische Reaktionen des beispielsweise in den Trägermaterialien vorhandenen Chlors wie im Falle von Polyvinylchlorid oder chlormethylierten Styrol-Divinylbenzol-Polymerisaten erreichen und als Übergangsmetallverbindungen solche des Titans verwenden (US 4477639, DD 282013). Hierbei ist insbesondere als nachteilig aufzuzeigen, daß die mit solchen Katalysatorsystemen hergestellten Polymerisate selbst bei sehr geringen Restkatalysatorgehalten im Polymeren im Vergleich zu anderen Katalysatorsystemen beispielsweise auf der Grundlage von Zirkonium stets eine deutlich schlechtere Eigenfarbe aufweisen. Außerdem erweist sich die Verwendung nur eines speziellen Übergangsmetalles im Katalysatorsystem als nachteilig bei der Variabilität der mit diesem System an den hergestellten Polymeren erzielbaren Produkteigenschaften.

Weitere Nachteile der bekannten Lösungen zur festen Fixierung der Katalysatorkomponenten auf der Polymeroberfläche durch die Bildung chemischer Bindungen über funktionelle Gruppen des Trägermaterials sind für technische Einsatzgebiete häufig eine ungenügende Polymerisationsaktivität der Katalysatorsysteme, eine zu aufwendige Herstellung der geträgerten Katalysatoren in Mehrstufenprozessen, die die mehrfache Zugabe und Abtrennung von Lösungsmitteln erfordern, eine notwendige Separation von inerten Reaktionsmedien vor der Katalysatordosierung sowie eine zu geringe Flexibilität bei der Einstellung der Produkteigenschaften insbesondere des Fließverhaltens bzw. der Molmassenparameter, was die Herstellung beispielsweise von Polyolefinen mit ultrahoher Molmasse ausschließt (z.B. DD 257431, DD 275693).

Der Erfindung liegt deshalb die Aufgabe zugrunde, ein Verfahren zur Herstellung von mittelbis ultrahochmolekularem Polyethylen durch Homo- oder Copolymerisation von Ethylen mit α-Olefinen in Gegenwart eines auf ein organisches Polymermaterial geträgerten metallocenartigen Ziegler-Natta-Mischkatalysators sowie einen auf einem organischen Polymermaterial geträgerten metallocenartigen Ziegler-Natta-Mischkatalysator zu entwickeln, die die genannten Nachteile nicht aufweisen und sich gleichzeitig durch eine hohe Polymerisationsaktivität, einen geringen Katalysatorrestgehalt und eine sehr gute Farbe des Polymerisates sowie durch eine wirtschaftliche Herstellungsweise auszeichnen.

Erfindungsgemäß wird die Polymerisation zur Herstellung von mittel- bis ultrahochmolekularem Polyethylen durch Homo- oder Copolymerisation von Ethylen mit α-Olefinen in Gegenwart eines auf ein organisches Polymermaterial geträgerten metallocenartigen Ziegler-Natta-Mischkatalysators durch
1. einen auf ein organisches Polymermaterial geträgerten metallocenartigen Ziegler-Natta-Mischkatalysator, enthaltend
   a) als organisches Polymermaterial ein teilweise chlormethyliertes Styrol-Divinylbenzol-Copolymerisat mit
      - einem Gehalt an Divinylbenzol von 1 bis 45 Masseprozent,
      - einem Chlorgehalt von 5 bis 23 Masseprozent,
      - einer spezifischen Oberfläche von 5 bis 1000 m²/g und
      - einer Korngröße von 50 bis 3000 µm,
   b) eine auf diesem organischen Polymermaterial geträgerte komplexe Verbindung der allgemeinen Formel

      (RₘMgX₂₋ₘ) · (RₙAlY₃₋ₙ)ₚ · (Z_{q}Me¹X_{4-q}) · EDᵣ

      mit R - Alkyl-, Cycloalkyl-, Aryl-, Aralkyl-, Alkaryl-, Alkenyl-
      X - Halogen-
      Y - Wasserstoff-, Halogen-, Alkoxy-
      Z - Cyclopentadienyl-, Fluorenyl-, Indenyl-, sowie deren substitu ierte bzw. hydrierte Verbindungen
      Me¹ - Übergangsmetall der IV. Nebengruppe des Periodensystems der Elemente
      ED - als Elektronendonator wirksame organische Verbindungen wie lineare oder cyclische Ether und Thioether
      m - 1 oder 2
      n - Zahlenwert von 1 bis 3
      p - Zahlenwert von 0,1 bis 1
      q - 1, 2, 3 oder 4
      r - Zahlenwert von 1 bis 2
   c) das Umsetzungsprodukt der auf dem organischen Polymermaterial geträgerten komplexen Verbindung von b) mit einem Gemisch aus
      A) einer Verbindung der allgemeinen Formel

         XₘMe² Y₄₋ₘ

         mit X, Y - Halogen-, Alkyl-, Alkenyl-, Aryl-, Alkaryl-, Aralkyl-, Alkoxy-, Aroxy-
         Me² - Übergangsmetall der IV. Nebengruppe des Periodensystems der Elemente
         m - 1, 2, 3 oder 4
         und
      B) einer Verbindung der allgemeinen Formel

         RₙCX₄₋ₙ

         mit R - Wasserstoff-, Alkyl-, Aryl-, Alkaryl-, Aralkyl-, Chlormethyl-, Dichlormethyl-, Trichlormethyl- oder partiell halogeniertes Alkyl-
         X - Halogen-, Alkyl-, Alkenyl-, Aryl-, Alkaryl-, Aralkyl-, Alkoxy-, Aroxy-
         n - 0, 1, 2 oder 3
         mit einem Molverhältnis der Verbindungen A) und B) im Bereich von 1:0,1 bis 1:2,
      wobei
      - das Ausgangssubstrat für die auf dem organischen Polymermaterial geträgerte Verbindung unter b) durch intensives Vermahlen des organischen Polymermaterials mit der Übergangsmetallverbindung unterhalb der Glasübergangstemperatur des Polymers unter anaeroben Bedingungen gewonnen wird,
      - die Übergangsmetalle der IV. Nebengruppe des Periodensystems der Elemente der auf dem organischen Polymermaterial geträgerten komplexen Verbindung unter b) Me¹ und der Verbindung der allgemeinen Formel unter A) des Umsetzungsproduktes unter c) Me² unterschiedlicher Natur sind und
2. eine als Aktivator wirksame und nicht als Alumoxan kondensierte Verbindung der allgemeinen Formel

   RₘAlY₃₋ₘ

   mit R - Alkyl-, Cycloalkyl-, Aryl-, Alkaryl-, Aralkyl-, Alkenyl-
   Y - Wasserstoff-, Halogen-, Alkoxy-
   m - Zahlenwert von 1 bis 3
   ausgelöst.

Gemäß der Erfindung kann als organisches Polymermaterial ein teilweise chlormethyliertes Styrol-Divinylbenzol-Copolymerisat mit
- einem Gehalt an Divinylbenzol von 2 bis 25 Masseprozent,
- einem Chlorgehalt von 15 bis 22,5 Masseprozent,
- einer spezifischen Oberfläche von 10 bis 300 m²/g und
- einer Korngröße von 80 bis 2000 µm
eingesetzt werden.

Der Erfindung entsprechend können als Übergangsmetalle der IV. Nebengruppe des Periodensystems der Elemente Me¹ und Me² diejenigen des Zirkoniums und Titans verwendet werden.

Als Übergangsmetall der IV. Nebengruppe des Periodensystems der Elemente kann in der auf dem organischen Polymermaterial geträgerten Verbindung Me¹ das des Zirkoniums und in der Verbindung A) des Umsetzungsgemisches Me² das des Titans enthalten sein.

Erfindungsgemäß kann die als Aktivator wirksame und nicht als Alumoxan kondensierte Verbindung Triisobutylaluminium sein.

Der Erfindung gemäß kann als Übergangsmetallverbindung für das durch intensives Vermahlen mit dem organischen Polymermaterial erhaltene Ausgangssubstrat für die auf dem organischen Polymermaterial geträgerte Verbindung ein Bis- (cyclopentadienyl)-titandichlorid dienen. Als Übergangsmetallverbindung für das durch intensives Vermahlen mit dem organischen Polymermaterial erhaltene Ausgangssubstrat für die auf dem organischen Polymermaterial geträgerte Verbindung kann auch ein Bis (cyclopentadienyl)-zirkoniumdichlorid, ein Bis (indenyl)-zirkoniumdichlorid oder ein Bis (fluorenyl)-zirkoniumdichlorid verwendet werden.

Das durch die erfindungsgemäße Homo- oder Copolymerisation von Ethylen mit α-Olefinen in Gegenwart eines auf ein organisches Polymermaterial geträgerten metallocenartigen Ziegler-Natta-Mischkatalysators hergestellte Polymerisat kann Viskositätszahlen von 200 bis 3000 ml/g aufweisen.

Gemäß der Erfindung kann der auf einem organischen Polymermaterial geträgerte metallocenartige Ziegler-Natta-Mischkatalysator enthalten:
a) als organisches Polymermaterial ein teilweise chlormethyliertes Styrol-Divinylbenzol-Copolymerisat mit
   - einem Gehalt an Divinylbenzol von 1 bis 45 Masseprozent,
   - einem Chlorgehalt von 5 bis 23 Masseprozent,
   - einer spezifischen Oberfläche von 5 bis 1000 m²/g und
   - einer Korngröße von 50 bis 3000 µm,
b) eine auf diesem organischen Polymermaterial geträgerte komplexe Verbindung der allgemeinen Formel

   (RₘMgX₂₋ₘ) · (RₙAlY₃₋ₙ)ₚ · (Z_{q}Me¹X_{4-q}) · EDᵣ

   mit R - Alkyl-, Cycloalkyl-, Aryl-, Aralkyl-, Alkaryl-, Alkenyl-
   X - Halogen-
   Y - Wasserstoff-, Halogen-, Alkoxy-
   Z - Cyclopentadienyl-, Fluorenyl-, Indenyl-, sowie deren substituierte bzw. hydrierte Verbindungen
   Me¹ - Übergangsmetall der IV. Nebengruppe des Periodensystems der Elemente
   ED - als Elektronendonator wirksame organische Verbindungen wie lineare oder cyclische Ether und Thioether
   m - 1 oder 2
   n - Zahlenwert von 1 bis 3
   p - Zahlenwert von 0,1 bis 1
   q- 1, 2, 3 oder 4
   r - Zahlenwert von 1 bis 2
c) das Umsetzungsprodukt der auf dem organischen Polymermaterial geträgerten komplexen Verbindung von b) mit einem Gemisch aus
   A) einer Verbindung der allgemeinen Formel

      XₘMe² Y₄₋ₘ

      mit X, Y - Halogen-, Alkyl-, Alkenyl-, Aryl-, Alkaryl-, Aralkyl-, Alkoxy-, Aroxy-
      Me² - Übergangsmetall der IV. Nebengruppe des Periodensystems der Elemente
      m- 1, 2, 3 oder 4
      und
   B) einer Verbindung der allgemeinen Formel

      RₙCX₄₋ₙ

      mit R - Wasserstoff-, Alkyl-, Aryl-, Alkaryl-, Aralkyl-, Chlormethyl-, Dichlormethyl-, Trichlormethyl- oder partiell halogeniertes Alkyl-
      X - Halogen-, Alkyl-, Alkenyl-, Aryl-, Alkaryl-, Aralkyl-, Alkoxy-, Aroxy-
      n - 0, 1, 2 oder 3
      mit einem Molverhältnis der Verbindungen A) und B) im Bereich von 1:0,1 bis 1:2,
   wobei
   - das Ausgangssubstrat für die auf dem organischen Polymermaterial geträgerte Verbindung unter b) durch intensives Vermahlen des organischen Polymermaterials mit der Übergangsmetallverbindung unterhalb der Glasübergangstemperatur des Polymers unter anaeroben Bedingungen gewonnen wird,
   - die Übergangsmetalle der IV. Nebengruppe des Periodensystems der Elemente der auf dem organischen Polymermaterial geträgerten komplexen Verbindung unter b) Me¹ und der Verbindung der allgemeinen Formel unter A) des Umsetzungsproduktes unter c) Me² unterschiedlicher Natur sind und
   - der auf einem organischen Polymermaterial geträgerte metallocenartige Ziegler-Natta-Mischkatalysator mit einer nicht als Alumoxan kondensierten Verbindung der allgemeinen Formel

      RₘAlY₃₋ₘ

      mit R - Alkyl-, Cycloalkyl-, Aryl-, Alkaryl-, Aralkyl-, Alkenyl-
      Y - Wasserstoff-, Halogen-, Alkoxy-
      m - Zahlenwert von 1 bis 3
   aktiviert wird.

Die Herstellung des auf einem organischen Polymermaterial geträgerten metallocenartigen Ziegler-Natta-Mischkatalysators kann erfindungsgemäß dadurch erfolgen, daß die aufgeführten Komponenten in der angegebenen Reihenfolge miteinander umgesetzt werden. Entsprechend der Erfindung kann zur Herstellung von Homo- und Multipolymerisaten von C₂bis C₁₂-Alkenen als Katalysatorsystem wie beschrieben ein auf einem organischen Polymermaterial geträgerter metallocenartiger Ziegler-Natta-Mischkatalysator und als Aktivator eine nicht als Alumoxan kondensierte Verbindung der angegebenen allgemeinen Formel verwendet werden

Die mit solchen Katalysatoren entwickelten und hergestellten Homo- und Copolymerisate von Olefinen zeichnen sich dadurch aus, daß sie ausgezeichnete morphologische Eigenschaften ohne einen durch den Abtragungsprozeß des auf der Polymeroberfläche fixierten Katalysators bedingten hohen Anteil an sehr feinen Polymerpartikeln sowie sehr gute optische Eigenschaften aufweisen, durch den Katalysator eine hohe Flexibilität bei der Einstellung der Produkteigenschaften insbesondere des Fließverhaltens und der Molmassenparameter bei Verwendung des gleichen Katalysatorsystems erreicht werden kann, was beispielsweise die Herstellung von Polyolefinen mit ultrahoher Molmasse gestattet, sowie einen Verarbeitungsprozeß ohne Korrosionserscheinungen an den Polymerverarbeitungsmaschinen und ohne unerwünschte Verarbeitungserscheinungen wie Stippen gewährleisten.

Der entwickelte geträgerte metallocenartige Ziegler-Natta-Mischkatalysator zeichnet sich dadurch aus, daß er in verschiedenen Polymerisationsprozessen zur Herstellung von Polyolefinen gut gehandhabt werden kann, eine hohe Polymerisationsaktivität aufweist und in einfacher Verfahrensweise ohne die Verwendung unzureichend verfügbarer Cokatalysatoren ohne Hochtemperaturbehandlung und ohne mehrfache Separation von inerten Reaktionsmedien zugänglich ist.

Die Erfindung soll nachstehend an einigen ausgewählten Ausführungsbeispielen näher erläutert werden.

### Beispiel 1

### a) Herstellung des geträgerten metallocenartigen Ziegler-Natta-Mischkatalysators

In einem Gemisch aus 32,1 ml getrocknetem Hexan und 1,77 ml getrocknetem Tetrahydrofuran wurden unter anaeroben Bedingungen 0,394 g Magnesiumspäne dispergiert und gegebenenfalls mit einer Spur Jod am Rückfluß unter Rühren mit über einen Zeitraum von ca. 10 min tropfenweise zugegebenen 2,22 ml destilliertem n-Butylchlorid unter Sieden zur Reaktion gebracht. Nach weiteren 9,5 Stunden Kochen am Rückfluß waren die Magnesiumspäne vollständig aufgelöst und die Bildung der magnesiumorganischen Verbindung abgeschlossen. Jetzt wurde in die siedende Suspension im Verlauf von 25 min 15,47 ml Triisobutylaluminium in Form einer
5 %igen Lösung in Hexan zugetropft und noch eine weitere Stunde unter Rühren am Rückfluß erhitzt. In diese Suspension wurden bei Raumtemperatur 3,10 g eines durch anaerobes intensives Vermahlen in einem Syalonbecher mittels einer Planetenmikromühle hergestellten Gemisches aus 25 Masseprozent Bis (indenyl)- zirkoniumdichlorid und 75 Masseprozent eines teilweise chlormethylierten Styrol-Divinylbenzol-Copolymerisates mit
- einem Gehalt an Divinylbenzol von 5,5 Masseprozent,
- einem Chlorgehalt von 21,6 Masseprozent,
- einer spezifischen Oberfläche von 55 m³/g und
- einer Korngröße von 300 bis 1200 µm
eingetragen. Anschließend wurde unter Kühlung ein Gemisch aus 0,44 ml 1,2-Dichlorethan, 12 ml Hexan und 0,40 ml Titantetrachlorid zugetropft und noch 2 Stunden in der Siedehitze belassen.

Die somit erhaltene hellbraune Suspension des Mischkatalysators enthielt ca. 1,3 mg Titan je ml Suspension und ca. 0,62 mg Zirkonium je ml Suspension.

### b) Polymerisation mit dem geträgerten metallocenartigen Ziegler-Natta-Mischkatalysator

In einem sekurierten und mit Ethylen gespülten Rührautoklav wurden entsprechend den Angaben der Tabelle 1 das Triisobutylaluminium als Aktivator enthaltende Hexan vorgelegt, die entsprechende Menge der unter a) hergestellten Suspension des Mischkatalysators als Hexan-Verdünnung hinzugegeben sowie zwei bar Ethylen aufgedrückt. Nach dem schnellen Erwärmen auf die Polymerisationstemperatur von
85 °C unter intensivem Rühren wurde der Ethylendruck entsprechend dem in Tabelle 1 angegebenen Wert endgültig eingestellt und durch kontinuierliches Nachdosieren des verbrauchten Monomeren über den Polymerisationszeitraum von zwei Stunden konstant gehalten. Anschließend wurde zur Beendigung des Versuches die Nachdosierung unterbrochen, der Reaktorinhalt abgekühlt, entspannt und das Polyethylen abfiltriert und getrocknet.

Die Ergebnisse der Polymerisation sowie die Eigenschaften des erhaltenen Polyethylens sind in der Tabelle 2 aufgeführt. Der Versuch belegt die Möglichkeit, mit dem erfindungsgemäßen auf ein organisches Polymermaterial geträgerten metallocenartigen Ziegler-Natta-Mischkatalysator ein Polymer mit ausgezeichneten morphologischen Eigenschaften, beispielsweise einer hohen Schüttdichte, bei einer sehr hohen Viskositätszahl und damit Molmasse zu erhalten. Das Produkt zeichnet sich weiterhin durch eine sehr gute Eigenfarbe, ersichtlich aus einem hohen Wert der Farbzahl Cᵥ aus und kann mit einer sehr hohen Katalysatorausbeute hergestellt werden. Der Mischkatalysator selbst kann in einfacher Verfahrensweise ohne Hochtemperaturbehandlung und ohne mehrfache Separation inerter Reaktionsmedien als Suspension oder deren Verdünnung hergestellt und eingesetzt werden, wobei auf die Verwendung unzureichend verfügbarer

Cokatalysatoren verzichtet werden kann.

### Beispiel 2 (Vergleichsbeispiel)

### a) Herstellung des geträgerten metallocenartigen Ziegler-Natta-Katalysators

Bei der Herstellung dieses Katalysators wurde analog den Angaben in Beispiel 1 verfahren, wobei jedoch Titantetrachlorid durch Zirkoniumtetrachlorid substituiert wurde. Somit wurden 32,6 ml Hexan, 1,8 ml Tetrahydrofuran und 0,40 g Magnesiumspäne mit 2,25 ml n-Butylchlorid umgesetzt und 15,4 ml Triisobutylaluminium als Lösung zugetropft sowie 3,147 g des Mahlgutes aus Bis- (indenyl)-zirkoniumdichlorid und dem in Beispiel 1 aufgeführten teilweise chlormethylierten Styrol-Divinylbenzol-Copolymerisat in dem dort angegebenen Masseverhältnis eingetragen. Nach dem weiteren Umsetzen mit 0,45 ml 1,2-Dichlorethan, 12,2 ml Hexan und 0,65 ml Zirkoniumtetrachlorid wurde eine Suspension des Katalysators mit einem Gehalt von ca. 1,4 mg Zirkonium je ml Suspension erhalten.

### b) Polymerisation mit dem geträgerten metallocenartigen Ziegler-Natta-Katalysator

Die Polymerisation mit dem unter a) hergestellten Ziegler-Natta-Katalysator auf der Grundlage nur des Übergangsmetalls Zirkonium wurde analog der unter Beispiel 1 beschriebenen Polymerisation und den in Tabelle 1 enthaltenen Angaben ausgeführt. Da nach einer Reaktionszeit von 1 h noch keine Ethylenabnahme zu registrieren war, wurde nochmals Katalysatorsuspension mit einem Gehalt von 0,212 mg Zirkonium nachdosiert und der Versuch aufgrund fehlenden Ethylenverbrauchs nach weiteren 10 min abgebrochen. Im Ergebnis dieser Polymerisation konnten nur Spuren nicht isolierbaren Polyethylens in Form eines schwer entfernbaren Wandbelages erhalten werden.

Dieses Beispiel zeigt, daß bei nicht erfindungsgemäßer Vorgehensweise die mittel- bis ultrahochmolekularen Polyethylene mit den erwünschten Eigenschaften nicht erhalten werden können.

### Beispiel 3

### a) Herstellung des geträgerten metallocenartigen Ziegler-Natta-Mischkatalysators

In einem Gemisch aus 27,0 ml getrocknetem Hexan und 1,49 ml getrocknetem Tetrahydrofuran wurden unter anaeroben Bedingungen 0,33 g Magnesiumspäne dispergiert und gegebenenfalls mit einer Spur Jod am Rückfluß unter Rühren mit über einen Zeitraum von ca. 10 min tropfenweise zugegebenen 1,86 ml destilliertem n-Butylchlorid unter Sieden zur Reaktion gebracht. Nach weiteren 11 Stunden Kochen am Rückfluß waren die Magnesiumspäne vollständig aufgelöst und die Bildung der magnesiumorganischen Verbindung abgeschlossen. Jetzt wurde in die siedende Suspension im Verlauf von 30 min 11,4 ml Triisobutylaluminium in Form einer
5 %igen Lösung in Hexan zugetropft und noch eine weitere Stunde unter Rühren am Rückfluß erhitzt. In diese Suspension wurden bei Raumtemperatur 2,605 g eines durch anaerobes intensives Vermahlen in einem Syalonbecher mittels einer Planetenmikromühle hergestellten Gemisches aus 25 Masseprozent Bis- (cyclopentadienyl)-zirkoniumdichlorid und 75 Masseprozent eines teilweise chlormethylierten Styrol-Divinylbenzol-Copolymerisates mit
- einem Gehalt an Divinylbenzol von 5,5 Masseprozent,
- einem Chlorgehalt von 21,6 Masseprozent,
- einer spezifischen Oberfläche von 55 m³/g und
- einer Korngröße von 300 bis 1200 µm
eingetragen. Anschließend wurde unter Kühlung ein Gemisch aus 0,37 ml 1,2-Dichlorethan, 10,1 ml Hexan und 0,34 ml Titantetrachlorid zugetropft und noch 2 Stunden in der Siedehitze belassen.

Die somit erhaltene hellbraune Suspension des Mischkatalysators enthielt ca. 1,1 mg Titan je ml Suspension und ca. 0,91 mg Zirkonium je ml Suspension.

### b) Polymerisation mit dem geträgerten metallocenartigen Ziegler-Natta-Mischkatalysator

Für die Polymerisation unter Verwendung des gemäß a) erhaltenen geträgerten metallocenartigen Ziegler-Natta-Mischkatalysators auf der Basis von Zirkonium und Titan als Übergangsmetalle wurde die in Beispiel 1 beschriebene Vorgehensweise gewählt. Die eingesetzten Mengen an Katalysatorsuspension und Aktivator sowie Lösungsmittel und der eingestellt Partialdruck an Ethylen gehen aus der Tabelle 1 hervor.

Polymerisationsergebnisse und Eigenschaften des hergestellten Polyethylens enthält die Tabelle 3. Es ist ersichtlich, daß sich der erfindungsgemäße Mischkatalysator durch eine hohe Polymerisationsaktivität auszeichnet. Auch dieser Katalysator kann in einfacher Verfahrensweise ohne Hochtemperaturbehandlung und mehrfache Separation inerter Reaktionsmedien hergestellt und eingesetzt werden, ohne unzureichend verfügbare Cokatalysatoren verwenden zu müssen

Das Polymerisat selbst weist insbesondere eine sehr hohe Molmasse, eine hohe Schüttdichte und eine sehr gute Eigenfarbe auf. Hervorragend ist der durch den Abtragungsprozeß des auf der Polymeroberfläche fixierten Katalysators bedingte geringe Anteil an sehr feinen Polymerpartikeln, was aus einem geringen Anteil an Polymerisat mit einer Korngröße kleiner als 250 µm an der gesamten Korngrößenverteilung folgt. Weiterhin zeichnet sich das Polymerisat durch einen geringen Asche- und Katalysatorrestgehalt und durch eine ausreichend hohe Temperatur des Oxidationsmaximums aus.

### Beispiel 4 (Vergleichsbeispiel)

### a) Herstellung des geträgerten metallocenartigen Ziegler-Natta-Katalysator

Die Synthese dieses Katalysators erfolgte entsprechend den Angaben des Beispiels 3, wobei allerdings das Bis (cyclopentadienyl)-zirkoniumdichlorid durch Bis-(cyclopentadienyl)-titandichlorid ersetzt wurde.

Zur Herstellung wurden demzufolge 36,3 ml Hexan, 2 ml Tetrahydrofuran und 0,445 g Magnesiumspäne mit 2,5 ml n-Butylchlorid zur Reaktion gebracht, mit 16,5 ml Triisobutylaluminium als Lösung in Hexan versetzt und 3,064 g eines Mahlgutes aus einem Masseteil Bis (cyclopentadienyl) -titandichlorid und drei Masseteilen des in Beispiel 3 beschriebenen teilweise chlormethylierten Styrol-Divinylbenzol-Copolymerisates eingetragen. Anschließend erfolgte die Umsetzung mit 0,5 ml 1,2-Dichlor-ethan, 13,6 ml Hexan und 0,35 ml Titantetrachlorid. Die erhaltene kakaobraune Katalysatorsuspension enthielt ca. 1,7 mg Titan je ml Suspension.

### b) Polymerisation mit dem geträgerten metallocenartigen Ziegler-Natta-Katalysator

In diesem Beispiel wurde bei der Polymerisation mit dem unter a) hergestellten Katalysator nur auf der Grundlage des Titans als Übergangsmetall nach den Angaben des Beispiel 3 und der Tabelle 1 verfahren. Die Eigenschaften des auf diese Weise hergestellten Polyethylens sowie die Ergebnisse der Polymerisation sind im Vergleich zu Beispiel 3 ebenfalls in der Tabelle 3 aufgeführt.

Es ist klar ersichtlich, daß bei nicht erfindungsgemäßer Vorgehensweise zwar Polymerisate mit vergleichbarer Molmasse hergestellt werden können, die erwünschten Eigenschaften jedoch nicht erzielt werden können. So zeigen die in nicht erfindungsgemäßer Vorgehensweise hergestellten Polymerisate eine geringere Schüttdichte, eine wesentlich schlechtere Farbzahl, einen sehr hohen Anteil mit Korngrößen unter 250 µm, einen deutlich schlechteren Asche- und Katalysatorrestgehalt, eine niedrigere Temperatur des Oxidationsmaximums sowie eine geringere molare Katalysatorausbeute.

### Beispiel 5

### a) Herstellung des geträgerten metallocenartigen Ziegler-Natta-Mischkatalysators

Die Herstellung des geträgerten metallocenartigen Ziegler-Natta-Mischkatalysators auf der Grundlage von Bis (cyclopentadienyl) -zirkoniumdichlorid und Titantetrachlorid erfolgte nach der in Beispiel 3 beschriebenen Vorgehensweise.

### b) Polymerisation mit dem geträgerten metallocenartigen Ziegler-Natta-Mischkatalysator

Die Polymerisation wurde gemäß Beispiel 3 und Tabelle 1 durchgeführt. Jedoch wurde in diesem Beispiel in Gegenwart von Wasserstoff gearbeitet, dessen Partikeldruck nach dem Aufdrücken der ersten Teilmenge Ethylen bei Raumtemperatur eingestellt wurde.

In der Tabelle 4 sind die Polymerisationsergebnisse und die Eigenschaften des erhaltenen Polyethylens zusammengefaßt. Die über den Einsatz von Wasserstoff erzielte niedrigere Viskositätszahl des Polymerisates belegt die hohe Flexibilität des Mischkatalysators bei der Einstellung der Produkteigenschaften insbesondere des Fließverhaltens und der Molmassenparameter bei Verwendung des gleichen Katalysatorsystems wie in Beispiel 3. Weiterhin zeichnet sich dieses Polymerisat trotz relativ niedriger Viskositätszahl durch eine sehr gute Farbzahl aus, was die hervorragenden optischen Eigenschaften der erfindungsgemäß hergestellten Polymerisate bestätigt.

### Beispiel 6

### a) Herstellung des geträgerten metallocenartigen Ziegler-Natta-Mischkatalysators

Die Herstellung des geträgerten metallocenartigen Ziegler-Natta-Mischkatalysators aus den Komponenten Bis(cyclopentadienyl)-zirkoniumdichlorid und Titantetrachlorid wurde nach den Angaben des Beispiels 3 vorgenommen.

### b) Polymerisation mit dem geträgerten metallocenartigen Ziegler-Natta-Mischkatalysator

Die Herstellung des Polymerisates erfolgte nach den Angaben des Beispiels 5 und der Tabelle 1. Ergänzend zu Beispiel 5 wurde als Comonomer Buten eingesetzt und als Lösung in Hexan mit einer Konzentration von 111,3 ml Buten/ml nach Erreichen der Reaktionstemperatur und Druckeinstellung zugesetzt.

Die Ergebniszusammenstellung bezüglich der Polymerisation und der Eigenschaften des erhaltenen Polyethylens zeigt die Tabelle 4. Auch hier sind die Vorzüge der erfindungsgemäßen Vorgehensweise selbst bei Zusatz von Buten als Comonomer klar ersichtlich.

### Beispiel 7 und 8

### a) Herstellung des geträgerten metallocenartigen Ziegler-Natta-Mischkatalysators

Der geträgerte metallocenartige Ziegler-Natta-Mischkatalysator wurde entsprechend Beispiel 3 auf der Basis von Bis (cyclopentadienyl) -zirkoniumdichlorid und Titantetrachlorid hergestellt.

### b) Polymerisation mit dem geträgerten metallocenartigen Ziegler-Natta-Mischkatalysator

Die Polymerisationen wurden nach der in Beispiel 6 angegebenen Verfahrensweise und unter Berücksichtigung der Angaben der Tabelle 1 durchgeführt. Anstelle des Comonomers Buten wurde jedoch Hexen gleichfalls als Lösung in Hexan, allerdings mit einem Gehalt an Hexen von 25,2 Masseprozent, verwendet. Die Zudosierung zur Reaktionsmischung erfolgte in zehn äquidistanten Zeitschritten über den gesamten Polymerisationszeitraum bei jeweils gleichen Teilmengen.

In der Tabelle 4 sind die Polymerisationsergebnisse sowie die Eigenschaften der Polyethylene zusammengefaßt, die gleichfalls die Vorzüge der erfindungsgemäßen Vorgehensweise und die hohe Flexibilität des Mischkatalysators bezüglich der Einstellung der Polymereigenschaften auch bei Verwendung von Hexen als Comonomer belegen.

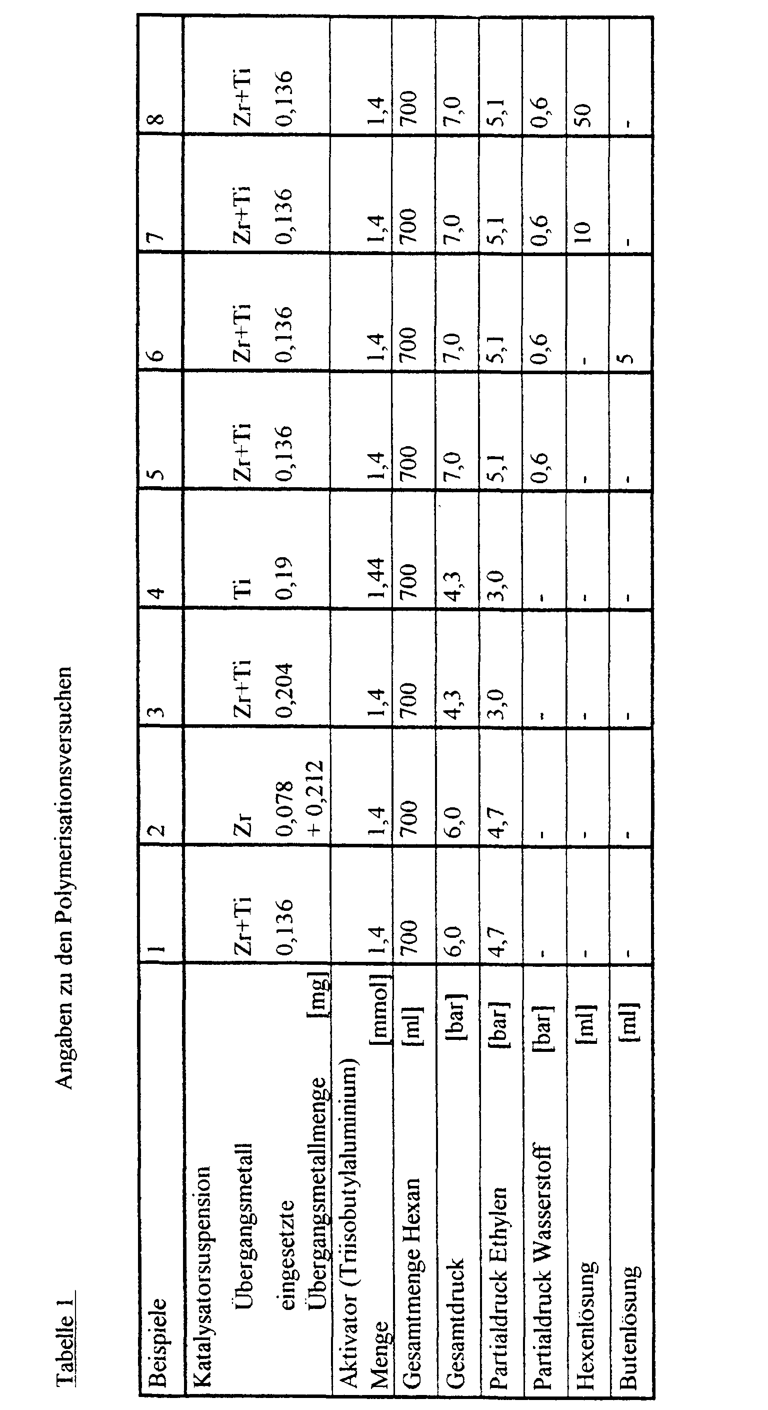

**Tabelle 2**

| Polymerisationsergebnisse und Eigenschaften des Polyethylens aus Beispiel 1 | | |
|---|---|---|
| Eigenschaften | Maßeinheit | Wert |
| **Polymerisationsergebnisse** | | |
| Polymerausbeute | g | 225,3 |
| Katalysatorausbeute | kg PE/g (Zr+Ti) | 1656,6 |
| Katalysatorausbeute | kg PE/mmol (Zr+Ti) | 102,3 |

| **Eigenschaften des Polyethylens** | | |
|---|---|---|
| Schüttdichte (DIN 53468) | g/l | 334 |
| Dichte (ISO 1183) | g/cm³ | 0,939 |
| Viskositätszahl (ISO 1191) | cm³/g | 1310 |
| Farbzahl Cv (Hunter-Lab) | | 115,6 |

**Tabelle 3**

| Polymerisationsergebnisse und Eigenschaften des Polyethylens aus den Beispielen 3 und 4 | | | |
|---|---|---|---|
| Eigenschaften | Maßeinheit | Beispiel 3 | Beispiel 4 |
| **Polymerisationsergebnisse** | | | |
| Polymerausbeute | g | 168,7 | 167,4 |
| Katalysatorausbeute | kg PE/g Me | 827 | 881 |
| Katalysatorausbeute | kg PE/mmol Me | 50,7 | 42,2 |

| **Eigenschaften des Polyethylens** | | | |
|---|---|---|---|
| Schüttdichte (DIN 53468) | g/l | 292 | 276 |
| Dichte (ISO 1183) | g/cm³ | 0,938 | 0,937 |
| Viskositätszahl (ISO 1191) | cm³/g | 1594 | 1722 |
| Farbzahl Cv (Hunter-Lab) | | 117,0 | 112,0 |

| **Korngrößenverteilung** | | | |
|---|---|---|---|
| mittlere Korngröße | µm | 549 | 295 |
| Anteil bis 250 µm | % | 21,6 | 45,3 |

| **Katalysatorrestgehalt im Polymeren** | | | |
|---|---|---|---|
| Ti | ppm wt | 0,8 | 1,8 |
| Zr | ppm wt | 2,1 | - |
| Al | ppm wt | 88 | 200 |
| Asche | ppm wt | 230 | 490 |
| | | | |
| Temperatur des Oxidationsmaximums (DTA) | °C | 209,8 | 207,3 |

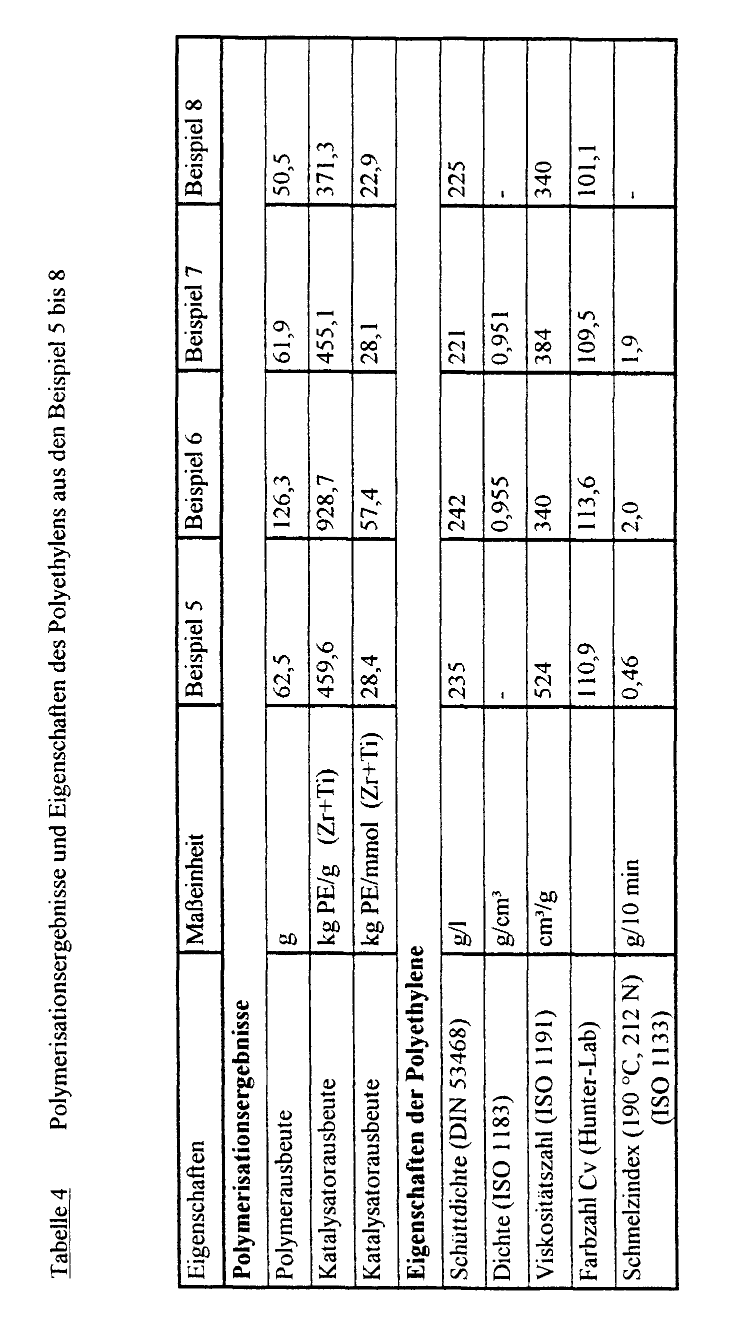

## Patentansprüche

1. Verfahren zur Herstellung von mittel- bis ultrahochmolekularen Polyolefinen durch Homo- oder Copolymerisation von Olefinen mit anderen α-Olefinen in Gegenwart eines auf ein organisches Polymermaterial geträgerten metallocenartigen Ziegler-Natta-Mischkatalysators, **dadurch gekennzeichnet, daß** die Polymerisation durch
1. einen auf ein organisches Polymermaterial geträgerten metallocenartigen Ziegler-Natta-Mischkatalysator, enthaltend
a) als organisches Polymermaterial ein teilweise chlormethyliertes Styrol-Divinylbenzol-Copolymerisat mit
- einem Gehalt an Divinylbenzol von 1 bis 45 Masseprozent,
- einem Chlorgehalt von 5 bis 23 Masseprozent,
- einer spezifischen Oberfläche von 5 bis 1000 m²/g und
- einer Korngröße von 50 bis 3000 µm,
b) eine auf diesem organischen Polymermaterial geträgerte komplexe Verbindung der
allgemeinen Formel
(RₘMgX₂₋ₘ) · (RₙAlY₃₋ₙ)ₚ · (Z_{q}Me¹X_{4-q}) · EDᵣ
mit R - Alkyl-, Cycloalkyl-, Aryl-, Aralkyl-, Alkaryl-, Alkenyl-
X - Halogen-
Y - Wasserstoff-, Halogen-, Alkoxy-
Z - Cyclopentadienyl-, Fluorenyl-, Indenyl-, sowie deren substituierte bzw. hydrierte Verbindungen
Me¹ - Übergangsmetall der IV. Nebengruppe des Periodensystems der Elemente
ED - als Elektronendonator wirksame organische Verbindungen wie lineare oder cyclische Ether und Thioether
m - 1 oder 2
n - Zahlenwert von 1 bis 3
p - Zahlenwert von 0,1 bis 1
q- 1, 2, 3 oder 4
r - Zahlenwert von 1 bis 2
c) das Umsetzungsprodukt der auf dem organischen Polymermaterial geträgerten komplexen Verbindung von b) mit einem Gemisch aus
A) einer Verbindung der allgemeinen Formel
XₘMe²Y₄₋ₘ
mit X, Y - Halogen-, Alkyl-, Alkenyl-, Aryl-, Alkaryl-, Aralkyl-, Alkoxy-, Aroxy-
Me² - Übergangsmetall der IV. Nebengruppe des Periodensystems der Elemente
m - 1, 2, 3 oder 4
und
B) einer Verbindung der allgemeinen Formel
RₙCX₄₋ₙ
mit R - Wasserstoff-, Alkyl-, Aryl-, Alkaryl-, Aralkyl-, Chlormethyl-, Dichlormethyl-, Trichlormethyl- oder partiell halogeniertes Alkyl-
X - Halogen-, Alkyl-, Alkenyl-, Aryl-, Alkaryl-, Aralkyl-, Alkoxy-, Aroxy-
n - 0, 1, 2 oder 3
mit einem Molverhältnis der Verbindungen A) und B) im Bereich von 1:0,1 bis 1:2,
wobei
- das Ausgangssubstrat für die auf dem organischen Polymermaterial geträgerte Verbindung unter b) durch intensives Vermahlen des organischen Polymermaterials mit der Übergangsmetallverbindung unterhalb der Glasübergangstemperatur des Polymers unter anaeroben Bedingungen gewonnen wird,
- die Übergangsmetalle der IV. Nebengruppe des Periodensystems der Elemente der auf dem organischen Polymermaterial geträgerten komplexen Verbindung unter b) Me¹ und der Verbindung der allgemeinen Formel unter A) des Umsetzungsproduktes unter c) Me² unterschiedlicher Natur sind und
2. einer als Aktivator wirksame und nicht als Alumoxan kondensierte Verbindung der allgemeinen Formel
RₘAlY₃₋ₘ
mit R - Alkyl-, Cycloalkyl-, Aryl-, Alkaryl-, Aralkyl-, Alkenyl-
Y - Wasserstoff-, Halogen-, Alkoxy-
m - Zahlenwert von 1 bis 3
ausgelöst wird.

2. Verfahren nach Anspruch 1, **dadurch gekennzeichnet, daß** als organisches Polymermaterial ein teilweise chlormethyliertes Styrol-Divinylbenzol-Copolymerisat mit
- einem Gehalt an Divinylbenzol von 2 bis 25 Masseprozent,
- einem Chlorgehalt von 15 bis 22,5 Masseprozent,
- einer spezifischen Oberfläche von 10 bis 300 m²/g und
- einer Korngröße von 80 bis 2000 µm
eingesetzt wird.

3. Verfahren nach den Ansprüchen 1 und 2, **dadurch gekennzeichnet, daß** als Übergangsmetalle der IV. Nebengruppe des Periodensystems der Elemente Me¹ und Me² diejenigen des Zirkoniums und Titans verwendet werden.

4. Verfahren nach den Ansprüchen 1 bis 3, **dadurch gekennzeichnet, daß** als Übergangsmetall der IV. Nebengruppe des Periodensystems der Elemente in der auf dem organischen Polymermaterial geträgerten Verbindung Me¹ das des Zirkoniums und in der Verbindung A) des Umsetzungsgemisches Me² das des Titans enthalten ist.

5. Verfahren nach den Ansprüchen 1 bis 4, **dadurch gekennzeichnet, daß** die als Aktivator wirksame und nicht als Alumoxan kondensierte Verbindung Triisobutylaluminium ist.

6. Verfahren nach den Ansprüchen 1 bis 5, **dadurch gekennzeichnet, daß** als Übergangsmetallverbindung für das durch intensives Vermahlen mit dem organischen Polymermaterial erhaltene Ausgangssubstrat für die auf dem organischen Polymermaterial geträgerte Verbindung ein Bis (cyclopentadienyl)-titandichlorid dient.

7. Verfahren nach den Ansprüchen 1 bis 5, **dadurch gekennzeichnet, daß** als Übergangsmetallverbindung für das durch intensives Vermahlen mit dem organischen Polymermaterial erhaltene Ausgangssubstrat für die auf dem organischen Polymermaterial geträgerte Verbindung ein Bis-(cyclopentadienyl)-zirkoniumdichlorid, ein Bis (indenyl)-zirkoniumdichlorid oder ein Bis (fluorenyl)-zirkoniumdichlorid verwendet wird.

8. Verfahren nach den Ansprüchen 1 bis 7, **dadurch gekennzeichnet, daß** als Olefin Ethylen eingesetzt wird.

9. Auf einem organischen Polymermaterial geträgerter metallocenartiger Ziegler-Natta-Mischkatalysator enthaltend
a) als organisches Polymermaterial ein teilweise chlormethyliertes Styrol - Divinylbenzol- Copolymerisat mit
- einem Gehalt an Divinylbenzol von 1 bis 45 Masseprozent,
- einem Chlorgehalt von 5 bis 23 Masseprozent,
- einer spezifischen Oberfläche von 5 bis 1000 m²/g und
- einer Korngröße von 50 bis 3000 µm,
b) eine auf diesem organischen Polymermaterial geträgerte komplexe Verbindung der allgemeinen Formel
(RₘMgX₂₋ₘ) · (RₙAlY₃₋ₙ)ₚ · (Z_{q}Me¹X_{4-q}) · EDᵣ
mit R - Alkyl-, Cycloalkyl-, Aryl-, Aralkyl-, Alkaryl-, Alkenyl-
X - Halogen-
Y - Wasserstoff-, Halogen-, Alkoxy-
Z - Cyclopentadienyl-, Fluorenyl-, Indenyl-, sowie deren substituierte bzw. hydrierte Verbindungen
Me¹ - Übergangsmetall der IV. Nebengruppe des Periodensystems der Elemente
ED - als Elektronendonator wirksame organische Verbindungen wie lineare oder cyclische Ether und Thioether
m - 1 oder 2
n - Zahlenwert von 1 bis 3
p - Zahlenwert von 0,1 bis 1
q- 1, 2, 3 oder 4
r - Zahlenwert von 1 bis 2
c) das Umsetzungsprodukt der auf dem organischen Polymermaterial geträgerten komplexen Verbindung von b) mit einem Gemisch aus
A) einer Verbindung der allgemeinen Formel
XₘMe² Y₄₋ₘ
mit X, Y - Halogen-, Alkyl-, Alkenyl-, Aryl-, Alkaryl-, Aralkyl-, Alkoxy-, Aroxy-
Me² - Übergangsmetall der IV. Nebengruppe des Periodensystems der Elemente
m - 1, 2, 3 oder 4
und
B) einer Verbindung der allgemeinen Formel
RₙCX₄₋ₙ
mit R - Wasserstoff-, Alkyl-, Aryl-, Alkaryl-, Aralkyl-, Chlormethyl-, Dichlormethyl-, Trichlormethyl- oder partiell halogeniertes Alkyl-
X - Halogen-, Alkyl-, Alkenyl-, Aryl-, Alkaryl-, Aralkyl-, Alkoxy-, Aroxy-
n-0, 1, 2 oder 3
mit einem Molverhältnis der Verbindungen A) und B) im Bereich von 1:0,1 bis 1:2,
wobei
- das Ausgangssubstrat für die auf dem organischen Polymermaterial geträgerte Verbindung unter b) durch intensives Vermahlen des organischen Polymermaterials mit der Übergangsmetallverbindung unterhalb der Glasübergangstemperatur des Polymers unter anaeroben Bedingungen gewonnen wird,
- die Übergangsmetalle der IV. Nebengruppe des Periodensystems der Elemente der auf dem organischen Polymermaterial geträgerten komplexen Verbindung unter b) Me¹ und der Verbindung der allgemeinen Formel unter A) des Umsetzungsproduktes unter c) Me² unterschiedlicher Natur sind und
- der auf einem organischen Polymermaterial geträgerte metallocenartige Ziegler-Natta-Mischkatalysator mit einer nicht als Alumoxan kondensierten Verbindung der allgemeinen Formel
RₘAlY₃₋ₘ
mit R - Alkyl-, Cycloalkyl-, Aryl-, Alkaryl-, Aralkyl-, Alkenyl-
Y - Wasserstoff-, Halogen-, Alkoxy-
m - Zahlenwert von 1 bis 3
aktiviert wird.

10. Katalysator nach Anspruch 9, **dadurch gekennzeichnet, daß** die Herstellung des Katalysators aus den im Anspruch 9 aufgeführten Komponenten in der dort angegebenen Reihenfolge miteinander erfolgt.

## Claims

1. Process to produce medium to ultra high-molecular polyolefins through homopolymerization or copolymerization of olefins with other alpha olefins in the presence of a metallocene-like Ziegler-Natta mixed catalyst on an organic polymeric carrier, **characterized in that** the polymerization is initiated through
1. a metallocene-like Ziegler-Natta mixed catalyst on an organic polymeric carrier, containing
a) a partly chloromethylated styrene-divinyl benzene copolymer as organic polymeric material with
- a divinyl benzene content of 1 to 45 percent by weight;
- a chlorine content of 5 to 23 percent by weight;
- a specific surface area of 5 to 1,000 m²/g; and
- a grain size of 50 to 3,000 µm;
b) a complex compound on said organic polymeric carrier of the general formula
(RₘMgX₂₋ₘ) · (RₙAIY₃₋ₙ)ₚ · (Z_{q}Me¹X_{4-q}) · EDᵣ
whereby:
R - alkyl-, cycloalkyl-, aryl-, aralkyl, alkaryl-, alkenyl-
X - halogen-
Y - hydrogen-, halogen-, alkoxy-
Z - cyclopentadienyl-, fluorenyl-, indenyl- or other such substituted or hydrogenated compounds
Me¹ - transition metal of the sub-group IV of the periodic table of elements
ED - organic compound acting as an electron donor such as linear or cyclic ethers or thioethers
m - 1 or 2
n - any numerical value from 1 to 3
p - any numerical value from 0.1 to 1
q - 1, 2, 3 or 4
r - any numerical value from 1 to 2
c) the conversion product of the complex compound from b) on the organic polymeric carrier with a mixture of
A) a compound of the general formula
XₘMe²Y₄₋ₘ
whereby
X, Y - halogen-, alkyl-, alkenyl-, aryl, alkaryl-, aralkyl-, alkoxy-, aroxy-;
Me² - transition metal of sub-group IV of the periodic table of elements
m - 1, 2, 3 or 4;
and
B) a compound of the general formula
RₙCX₄₋ₙ
whereby
R - hydrogen-, alkyl-, aryl-, alkaryl-, aralkyl-, chloromethyl-, dichloromethyl-, trichloromethyl- or partially halogenated alkyl-;
X - halogen-, alkyl-, alkenyl-, aryl-, alkaryl-, aralkyl-, alkoxy-, aroxy-;
n - 0, 1, 2 or 3
with a molar ratio of compounds A) and B) in the range from 1:0.1 to 1:2;
whereby
- the starting substrate for the compound on the organic polymeric carrier mentioned at b) is obtained through intensive grinding of the organic polymeric material with the transition metal compound under anaerobic conditions at a temperature below the glass transition temperature of the polymer;
- the transition metals of sub-group IV of the periodic table of elements of the complex compound on an organic polymeric carrier mentioned at b), viz. Me¹, and those of the compound of the general formula at A) of the conversion product at c), viz. Me², are of a different nature; and
2. a compound acting as an activator, which is not condensed as alumoxane, of the general formula
RₘAIY₃₋ₘ
whereby
R - alkyl-, cycloalkyl-, aryl-, alkaryl-, aralkyl-, alkenyl-
Y - hydrogen-, halogen-, alkoxy-
m - any numerical value from 1 to 3.

2. Process according to claim 1, **characterized in that** a partially chloromethylated styrene-divinyl benzene copolymer with
- a divinyl benzene content of 2 to 25 percent by weight;
- a chlorine content of 15 to 22.5 percent by weight;
- a specific surface area of 10 to 300 m²/g; and
- a grain size of 80 to 2,000 µm
is used as the organic polymeric material.

3. Process according to any of claims 1 and 2, **characterized in that** the transition metals of zirconium and titanium are used as the transition metals of sub-group IV of the periodic table of elements for the elements Me¹ and Me².

4. Process according to any of claims 1 through 3, **characterized in that** the transition metal of sub-group IV of the periodic table of elements contained in the compound Me¹ on the organic polymeric carrier is the transition metal of zirconium, and that contained in compound A) of the conversion mixture Me² is that of titanium.

5. Process according to any of claims 1 through 4, **characterized in that** triisobutyl aluminum is the compound acting as an activator and not condensed as alumoxane.

6. Process according to any of claims 1 through 5, **characterized in that** a bis(cyclopentadienyl)-titanium dichloride is used as the transition metal compound for the starting substrate for the compound on the organic polymeric carrier obtained through intensive grinding with the organic polymeric material.

7. Process according to any of claims 1 through 5, **characterized in that** a bis(-(cyclopentadienyl)-zirconium dichloride, a bis-(indenyl)-zirconium dichloride or a bis-(fluorenyl)-zirconium dichloride is used as the transition metal compound for the starting substrate for the compound on the organic polymeric carrier obtained through intensive grinding with the organic polymeric material.

8. Process according to any of claims 1 through 7, **characterized in that** ethylene is used as an olefin.

9. Ziegler-Natta mixed catalyst on an organic polymeric carrier, containing
a) as the organic polymeric material, a partly chloromethylated styrene-divinyl benzene copolymer with
- a divinyl benzene content of 1 to 45 percent by weight;
- a chlorine content of 5 to 23 percent by weight;
- a specific surface area of 5 to 1,000 m²/g; and
- a grain size of 50 to 3,000 µm;
b) a complex compound on said organic polymeric carrier of the general formula
(RₘMgX₂₋ₘ) · (RₙAIY₃₋ₙ)ₚ · (Z_{q}Me¹X_{4-q}) · EDᵣ
whereby:
R - alkyl-, cycloalkyl-, aryl-, aralkyl, alkaryl-, alkenyl-
X - halogen-
Y - hydrogen-, halogen-, alkoxy-
Z - cyclopentadienyl-, fluorenyl-, indenyl- or other such substituted or hydrogenated compounds
Me¹ - transition metal of the sub-group IV of the periodic table of elements
ED - organic compound acting as an electron donor such as linear or cyclic ethers or thioethers
m - 1 or 2
n - any numerical value from 1 to 3
p - any numerical value from 0.1 to 1
q - 1, 2, 3 or 4
r - any numerical value from 1 to 2
c) the conversion product of the complex compound from b) on the organic polymeric carrier with a mixture of
A) a compound of the general formula
XₘMe²Y₄₋ₘ
whereby
X, Y - halogen-, alkyl-, alkenyl-, aryl, alkaryl-, aralkyl-, alkoxy-, aroxy-;
Me² - transition metal of sub-group IV of the periodic table of elements
m - 1, 2, 3 or 4;
and
B) a compound of the general formula
RₙCX₄₋ₙ
whereby
R - hydrogen-, alkyl-, aryl-, alkaryl-, aralkyl-, chloromethyl-, dichloromethyl-, trichloromethyl- or partially halogenated alkyl-;
X - halogen-, alkyl-, alkenyl-, aryl-, alkaryl-, aralkyl-, alkoxy-, aroxy-;
n - 0, 1, 2 or 3
with a molar ratio of compounds A) and B) in the range from 1:0.1 to 1:2;
whereby
- the starting substrate for the compound at b) on the organic polymeric carrier is obtained through intensive grinding of the organic polymeric material with the transition metal compound at a temperature below the glass transition temperature of the polymer under anaerobic conditions;
- the transition metals of sub-group IV of the periodic table of elements of the complex compound on an organic polymeric carrier mentioned at b), viz. Me¹, and those of the compound of the general formula at A) of the conversion product at c), viz. Me², are of a different nature; and
- the metallocene-like Ziegler-Natta mixed catalyst on the organic polymeric carrier is activated by means of a compound not condensed as alumoxane of the general formula
RₘAIY₃₋ₘ
whereby
R - alkyl-, cycloalkyl-, aryl-, alkaryl-, aralkyl-, alkenyl-
Y - hydrogen-, halogen-, alkoxy-
m - any numerical value from 1 to 3.

10. Catalyst according to claim 9, **characterized in that** it is produced from the compounds mentioned in claim 9 in the order specified therein.

## Revendications

1. Procédé de fabrication de polyoléfines de poids moléculaire moyen jusqu'à très haut par homopolymérisation ou copolymérisation d'oléfines avec d'autres oléfines ∀ en présence d'un catalyseur mixte de Ziegler-Natta de genre métallocène sur support en matière organique de polymère, **caractérisé par le fait que** la polymérisation est déclenchée par
1. un catalysateur mixte de Ziegler-Natta de genre métallocène sur support en matière organique de polymère contenant
a) comme matière organique de polymère un copolymère au styrène-divinylbenzène en partie chlorméthylé avec
- une teneur en divinylbenzène de 1 à 45 pour cent en poids,
- une teneur en chlore de 5 à 23 pour cent en poids,
- une surface spécifique de 5 à 1000 m²/g et
- une granulométrie de 50 à 3000 µm,
b) un composé complexe supporté sur cette matière organique au polymère de la formule générale
(RₘMgX₂₋ₘ) · (RₙAIY₃₋ₙ)ₚ · (Z_{q}Me¹X_{4-q}) · EDᵣ
avec
R - alkyle-, cycloalkyle-, aryle-, aralkyle-, alkaryle-, alkényle-
X - halogène-
Y - hydrogène-, halogène-, alkoxy-
Z - cyclopentadiényle-, fluorényle, indényle, ainsi que leurs composés substitués ou hydrogénés
Me¹ - métal transitoire du IVe groupe secondaire de la classification périodique des éléments
ED - composés organiques efficaces comme donneurs d'électrons tels que les thioéthers et éthers linéaires ou cycliques
m- 1 ou 2
n - valeur numérique de 1 à 3
p - valeur numérique de 0,1 à 1
q - 1, 2, 3 ou 4
r - valeur numérique de 1 à 2
c) le produit de transformation du composé complexe de b) supporté sur la matière organique de polymère avec un mélange
A) d'un composé de la formule générale
XₘMe² Y₄₋ₘ
avec X, Y - halogène-, alkyle-, alkényle-, aryle-, alkaryle, aralkyle, alkoxy-, aroxy-
Me² - métal transitoire du IVe groupe secondaire de la classification périodique des éléments
m - 1, 2, 3 ou 4
et
B) d'un composé de la formule générale
RₙCX₄₋ₙ
avec R- hydrogène-, alkyle-, aryle-, alkaryle-, aralkyle-, chlorométhyle-, dichlorométhyle-, trichlorométhyle ou alkyle- partiellement halogéné
X - halogène-, alkyle-, alkényle-, aryle-, alkaryle-, aralkyle alkoxy-, aroxy-
n-0, 1, 2 ou 3
avec un rapport molaire des composés A) et B) dans une gamme de 1:0,1 à 1:2
vu que
• le substrat de départ est obtenu pour le composé supporté sur la matière organique de polymère sous b) par un broyage profond de la matière organique de polymère avec le composé métallique transitoire en dessous de la température de transition vitreuse du polymère sous conditions anaérobies,
• les métaux transitoires du IVe groupe secondaire de la classification périodique des éléments du composé complexe supportés sur la matière organique de polymère sous b) Me¹ et le composé de la formule générale sous A) du produit de transformation sous c) Me² sont de nature différente et
2. d'un composé efficace non condensé comme alumoxane en tant qu'activateur de la formule générale
RₘAIY₃₋ₘ
avec R - alkyle-, cycloalkyle-, aryle-, alkaryle-, aralkyle-, alkényle
Y - hydrogène-, halogène-, alkoxy-
m - valeur numérique de 1 à 3

2. Procédé selon la revendication 1 **caractérisé par le fait qu'**est employé comme matière organique de polymère un copolymère au styrène-divinylbenzène en partie chlorméthylé avec
- une teneur en divinylbenzène de 2 à 25 pour cent en poids,
- une teneur en chlore de 15 à 22,5 pour cent en poids,
- une surface spécifique de 10 à 300 m²/g et
- une granulométrie de 80 à 2000 µm.

3. Procédé selon les revendications de 1 à 2 **caractérisé par le fait que** les métaux transitoires du VIe groupe secondaire du système périodique des éléments Me¹ et Me² utilisés sont ceux du zirconium et du titane.

4. Procédé selon les revendications de 1 à 3 **caractérisé par le fait que** le métal transitoire du VIe groupe secondaire du système périodique des éléments contenu dans le composé Me¹ supporté sur la matière organique de polymère est celui du zirconium et dans le composé A) du mélange de transformation Me² celui du titane.

5. Procédé selon les revendications de 1 à 4 **caractérisé par le fait que** le composé utilisé comme activateur efficace et non pas condensé comme aluxomane est du triisobutylaluminium.

6. Procédé selon les revendications de 1 à 5 **caractérisé par le fait que** l'on se sert d'un bis-(cyclopentadiényle) dichlorure de titane comme composé métallique de transition pour le substrat de départ obtenu par broyage profond avec la matière organique de polymère pour le composé supporté sur la matière organique de polymère.

7. Procédé selon les revendications de 1 à 5 **caractérisé par le fait qu'**est utilisé un bis-(cyclopentadiényle) dichlorure de zirconium, un bis-(indényle) dichlorure de zirconium, ou un bis (fluorényle) dichlorure de zirconium, comme composé métallique de transition pour le substrat de départ obtenu par broyage profond avec la matière organique de polymère pour le composé supporté sur la matière organique de polymère.

8. Procédé selon les revendications de 1 à 7 **caractérisé par le fait que** l'oléfine utilisée est de l'éthylène.

9. Un catalyseur mixte de Ziegler-Natta de genre métallocène sur support en matière organique de polymère contenant
a) comme matière organique de polymère un copolymère au styrène-divinylbenzène en partie chlorméthylé avec
- une teneur en divinylbenzène de 1 à 45 pour cent en poids,
- une teneur en chlore de 5 à 23 pour cent en poids,
- une surface spécifique de 5 à 1000 m²/g et
- une granulométrie de 50 à 3000 µm,
b) un composé complexe supporté sur cette matière organique au polymère de la formule générale
(RₘMgX₂₋ₘ) · (RₙAIY₃₋ₙ)ₚ · (Z_{q}Me¹X_{4-q}) · EDᵣ
avec
R - alkyle-, cycloalkyle-, aryle-, aralkyle-, alkaryle-, alkényle-
X - halogène-
Y - hydrogène-, halogène-, alkoxy-
Z - cyclopentadiényle-, fluorényle-, indényle-, ainsi que leurs composés substitués ou hydrogénés
Me¹ - métal transitoire du IVe groupe secondaire de la classification périodique des éléments
ED - composés organiques efficaces comme donneurs d'électrons tels que les thioéthers et éthers linéaires ou cycliques
m - 1 ou 2
n - valeur numérique de 1 à 3
p - valeur numérique de 0,1 à 1
q - 1, 2, 3 ou 4
r - valeur numérique de 1 à 2
c) le produit de transformation du composé complexe de b) supporté sur la matière organique de polymère avec un mélange
A) d'un composé de la formule générale
XₘMe² Y₄₋ₘ
avec X, Y - halogène-, alkyle-, alkényle- aryle-, alkaryle, aralkyle, alkoxy-, aroxy-
Me² - métal transitoire du IVe groupe secondaire de la classification périodique des éléments
m - 1, 2, 3 ou 4
et
B) d'un composé de la formule générale
RₙCX₄₋ₙ
avec R- hydrogène-, alkyle-, aryle-, alkaryle-, aralkyle-, chlorométhyle-, dichlorométhyle-, trichlorométhyle ou alkyle- partiellement halogéné
X - halogène-, alkyle-, alkényle-, aryle-, alkaryle-, aralkyle alkoxy-, aroxy-
n-0, 1, 2 ou 3
avec un rapport molaire des composés A) et B) dans une gamme de 1:0,1 à 1:2
vu que
• le substrat de départ est obtenu pour le composé supporté sur la matière organique de polymère sous b) par un broyage profond de la matière organique de polymère avec le composé métallique transitoire en dessous de la température de transition vitreuse du polymère sous conditions anaérobies,
• les métaux transitoires du IVe groupe secondaire de la classification périodique des éléments du composé complexe supportés sur la matière organique de polymère sous b) Me¹ et le composé de la formule générale sous A) du produit de transformation sous c) Me² sont de nature différente et
• le catalyseur mixte Zieger-Natta de genre métallocène supporté sur la matière organique de polymère est activé avec un composé non condensé comme alumoxane de la formule générale
RₘAIY₃₋ₘ
avec R - alkyle-, cycloalkyle-, aryle-, alkaryle-, aralkyle-, alkényle
Y - hydrogène-, halogène-, alkoxy-
m - valeur numérique de 1 à 3

10. Catalyseur selon la revendication 9, **caractérisé par le fait que** la fabrication de ce catalyseur se fait avec les constituants entre eux exposés dans la revendication 9 dans l'ordre de succession qui y est indiqué.
